# EUROPÄISCHE PATENTSCHRIFT

(11) **EP 1 924 829 B1**
(45) Veröffentlichungstag und Bekanntmachung des Hinweises auf die Patenterteilung: **18.11.2009**
(21) Anmeldenummer: 05778931.5
(22) Anmeldetag: 03.09.2005
(51) Int. Cl.: G01J 1/42, B23K 26/42, H01S 3/00

(54) **VERFAHREN UND VORRICHTUNG ZUM ERFASSEN DER RANDFELDINTENSITÄT EINES LASERSTRAHLS**
METHOD AND DEVICE FOR DETERMINATION OF FRINGING INTENSITY OF A LASER BEAM
PROCÉDÉ ET DISPOSITIF DE DÉTECTION DE L'INTENSITÉ DE LA ZONE PÉRIPHÉRIQUE DE DIFFRACTION D'UN FAISCEAU LASER

(43) Veröffentlichungstag der Anmeldung: 28.05.2008
(73) Patentinhaber: TRUMPF Werkzeugmaschinen GmbH + Co. KG, 71254 Ditzingen (DE)
(72) Erfinder: GESCHWANDNER, Mark, 70825 Korntal-Münchingen (DE); HÄBERLE, Norbert, 70839 Gerlingen (DE)
(74) Vertreter: Kohler Schmid Möbus
(86) Internationale Anmeldenummer: PCT/EP2005/009499
(87) Internationale Veröffentlichungsnummer: WO 2007/025563

(56) Entgegenhaltungen:
- EP-A- 0 421 135
- WO-A-98/59224
- US-A- 4 916 319
- US-A- 5 267 012

## Beschreibung

Die vorliegende Erfindung betrifft ein Verfahren und eine Vorrichtung zum Erfassen der Randfeldintensität eines Laserstrahls.

Randfelder bzw. Beugungsstrukturen von Laserstrahlen wirken sich sowohl beim Laserschneiden als auch beim Laserschweißen negativ auf den Prozess und damit direkt auf das Qualitätsergebnis aus. Es ist bekannt, den Querschnitt eines Laserstrahls zu vermessen und aus den Messergebnissen die Intensitätsverteilung und die Mode des Laserstrahls quantitativ zu bestimmen. Die bekannten Messverfahren sind jedoch - gemessen am Zweck der Messung - sehr aufwändig und unnötig kompliziert.

Aus der EP 0 421 135 A ist ein Verfahren zur Bestimmung der Position und des Durchmessers des Brennflecks eines Laserstrahls bekannt, wobei eine Lochblende mit einer koaxial zum Laserstrahl ausgerichteten runden Lochöffnung in Strahlrichtung des Laserstrahls verfahren wird. Ein Teil des durch die Lochöffnung transmittierten Laserstrahls wird von Sensoren erfasst.

Aus der WO 98/59224 A ist ebenfalls ein Verfahren zum Messen der Größe des Brennflecks in einem optischen System bekannt.

US 4 916 319 A offenbart schließlich eine Anordnung zur Vermessung des Strahlprofils eines Laserstrahls, in der das von einem Lochspiegel reflektierte Licht auf eine Kamera abgebildet wird.

Demgegenüber ist es die Aufgabe der vorliegenden Erfindung, ein einfaches Verfahren und eine Vorrichtung zu entwickeln, mit denen ein Entwickler bzw. ein Monteur störende Randfelder eines Laserstrahls bestimmen und dadurch Fehler lokalisieren kann.

Diese Aufgabe wird erfindungsgemäß gelöst durch ein Verfahren zum Erfassen der Randfeldintensität eines Laserstrahls, wobei eine insbesondere als Lochspiegel ausgebildete Lochblende mit einer koaxial zum Laserstrahl ausgerichteten runden Lochöffnung in Strahlrichtung des Laserstrahls verfahren und die Intensität des am Lochspiegel ausgeblendeten, insbesondere reflektierten Laserlichts gemessen wird.

Da Mode und Randfeld (Beugungsstrukturen) nach einer Fokussierung in der Nähe der Strahltaille (abhängig von den beugenden Strukturen, der Strahlausbreitung, Strahlformung und Brennweite der Fokussieroptik) voneinander getrennt sind, wird die Lochblende vorzugsweise im Bereich der Strahltaille des fokussierten Laserstrahls verfahren. Dabei wird die Lochblende kontinuierlich oder, was bevorzugt ist, inkrementell verfahren, und zwar entweder manuell oder automatisch. Erfindungsgemäß wird also die Intensität des Randfeldes in Abhängigkeit von der Entfernung zur Strahltaille gemessen.

Bevorzugt wird das an der Lochblende ausgeblendete, insbesondere reflektierte Laserlicht auf einen Absorber gelenkt und dabei dessen Wärmemenge, insbesondere kalorimetrisch, erfasst. Je weiter die Lochblende in den divergenten Laserstrahl positioniert wird, umso größer ist der Anteil der Mode bzw. der Beugungsstrukturen, die dann an der Lochblende ausgeblendet bzw. reflektiert und vom Absorber detektiert werden. Versuche haben gezeigt, dass der Übergang zwischen Beugungsstrukturen und Mode durch ein kleines Zwischenplateau getrennt sind, welches zur Bestimmung der Beugungsstrukturgrenzen herangezogen werden kann. Damit ist eine quantitative Aussage über die Intensität der Beugungsstrukturen möglich.

Die oben genannte Aufgabe wird erfindungsgemäß auch gelöst durch eine Vorrichtung zum Erfassen der Randfeldintensität eines Laserstrahls mit einer im Strahlengang des Laserstrahls angeordneten, in Strahlrichtung linear verfahrbaren Lochblende mit einer runden Lochöffnung, welche koaxial zum Laserstrahl ausgerichtet ist, und mit einer Messeinheit zum Erfassen der Intensität des an der Lochblende ausgeblendeten Laserlichts. Besonders bevorzugt ist die Lochblende als Lochspiegel ausgebildet, dessen Spiegelfläche vorteilhaft als eine entgegen der Strahlrichtung zulaufende Kegelfläche ausgebildet ist, welche ringförmig von einem Absorber umgeben ist.

Vorzugsweise ist die Lochblende im Bereich der Strahltaille des fokussierten Laserstrahls angeordnet.

Bei einer besonders bevorzugten Ausführungsform der Erfindung weist die Messeinheit einen im Strahlengang des an der Lochblende ausgeblendeten, insbesondere reflektierten Laserlichts angeordneten Absorber und ein Kalorimeter auf, das die vom Absorber absorbierte Wärmemenge als Maß für die Intensität des an der Lochblende ausgeblendeten bzw. reflektierten Laserlichts erfasst.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: schematisch den Aufbau der erfindungsgemäßen Vorrichtung zum Erfassen der Randfeldintensität eines fokussierten Laserstrahls; und
- Fig. 2: die mit der erfindungsgemäßen Vorrichtung erfasste Randfeldintensität in Abhängigkeit von der Entfernung zur Strahltaille des fokussierten Laserstrahls.

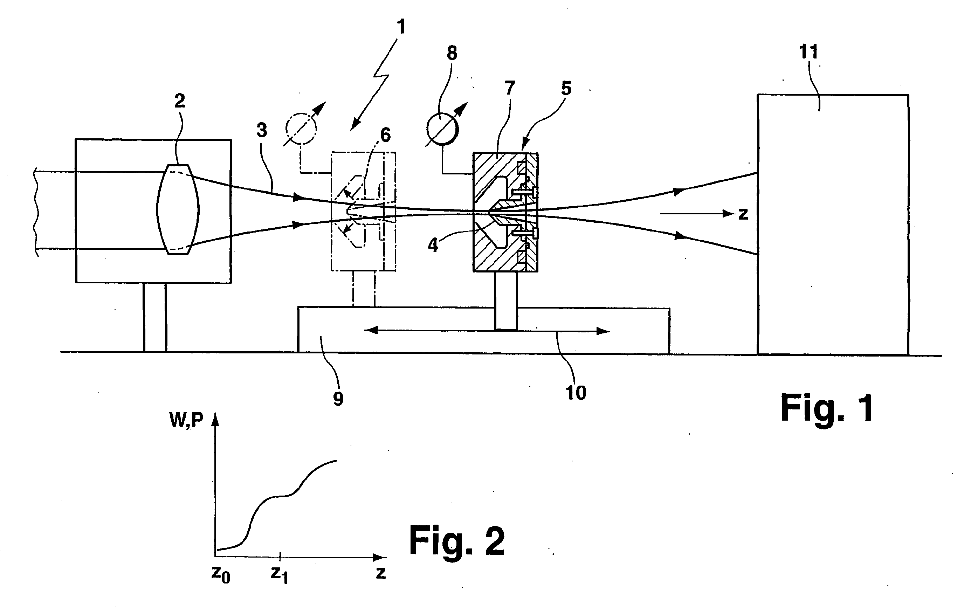

Die in **Fig. 1** gezeigte Vorrichtung **1** dient zum Erfassen der Randfeldintensität eines mittels einer Fokussieroptik **2,** z.B. Linse oder Spiegel, fokussierten Laserstrahls **3.** Die Fokussieroptik 3 hat eine Brennweite von ca. 200 mm bis ca. 400 mm und wird z.B. bei einer Laserbearbeitungsmaschine anstelle des Laserschneidkopfes oder -schweißkopfes eingesetzt.

Die Vorrichtung 1 umfasst eine im Strahlengang des fokussierten Laserstrahls 3 angeordnete, hier als Lochspiegel (Scraperspiegel) ausgebildete Lochblende **4,** deren runde Lochöffnung koaxial zur optischen Achse des Laserstrahls 3 ausgerichtet ist, sowie eine Messeinheit **5,** welche die Intensität des am Lochspiegel 4 reflektierten Laserlichts **6** erfasst. Dazu weist die Messeinheit 5 einen im Strahlengang des am Lochspiegel 4 reflektierten Laserlichts 6 angeordneten Absorber **7** und ein Kalorimeter **8** auf, das die vom Absorber 7 absorbierte Wärmemenge als Maß für die Intensität des am Lochspiegel 4 reflektierten Laserlichts 6 erfasst.

Der Lochspiegel 4 ist im Bereich der Strahltaille des fokussierten Laserstrahls 3 angeordnet und zusammen mit dem Absorber 7 als Einheit in einer Linearführung **9** in Strahlrichtung (Strahlausbreitungsrichtung) **z** manuell oder automatisch verfahrbar (Deppelpfeil **10**)**.** Die Spiegelfläche des Lochspiegels 3 ist als Kegelfläche ausgebildet, die ringförmig vom Absorber 7 umgeben ist. Die Lochöffnung des Lochspiegels 4 ist so gewählt, dass bei Anordnung des Lochspiegels 4 in der Strahltaille kein Laserlicht am Lochspiegel 4 reflektiert, sondern durch die Lochöffnung zu einer Strahlfalle **11** durchgelassen wird.

Nach Fresnel erfolgt eine Trennung von Mode (d.h. Gauß- oder Grundmode) und Randfeld (Beugungsstrukturen) nach einer Fokussierung in der Nähe der Strahltaille (abhängig von den beugenden Strukturen, der Strahlausbreitung, Strahlformung und Brennweite der Fokussieroptik). Die Einheit Lochspiegel 4 und Absorber 7 wird in z-Richtung um die Strahltaille bzw. den Fokus des Laserstrahls 3 inkrementell positioniert, d.h., der Lochspiegel 4 wird in vorher festgelegten Schritten in z-Richtung verfahren. Je weiter der Lochspiegel 4 von der Strahltaille entfernt, also in den divergenten Zweig des fokussierten Laserstrahls 3, positioniert wird, umso größer ist der Anteil der Mode bzw. der Beugungsstrukturen, der am Lochspiegel 4 reflektiert bzw. vom Absorber 7 detektiert wird.

In **Fig. 2** ist die mit der Vorrichtung 1 kalorimetrisch erfasste Wärmemenge **W** des Absorbers 7 bzw. die dazu proportionale Laserintensität **P** in Abhängigkeit von der Entfernung zur Strahltaille **z₀** des fokussierten Laserstrahls 3 aufgetragen. Nahe der Strahltaille z₀ ist die gemessene Laserintensität am kleinsten, da Mode und Beugungsstrukturen durch die Lochöffnung des Lochspiegels 4 hindurchtreten. Mit wachsendem Abstand von der Strahltaille z₀ werden zunächst die außen liegenden Beugungsstrukturen und nachfolgend auch der innen liegende Mode am Lochspiegel 4 reflektiert, so dass die gemessene Laserintensität ansteigt. Wie Fig. 2 zeigt, ist der Übergang zwischen Beugungsstrukturen und Mode von einem kleinen Zwischenplateau bei **z₁** getrennt, welches daher zur Bestimmung der Beugungsstrukturgrenzen herangezogen werden kann. Damit ist eine quantitative Aussage über die Intensität der Beugungsstrukturen möglich.

## Patentansprüche

1. Verfahren zum Erfassen der Randfeldintensität eines Laserstrahls (3), wobei eine Lochblende (4) mit einer koaxial zum Laserstrahl (3) ausgerichteten runden Lochöffnung in Strahlrichtung (z) des Laserstrahls (3) verfahren wird und die Intensität des an der Lochblende (4) ausgeblendeten Laserlichts (6) gemessen wird.

2. Verfahren nach Anspruch 1, **dadurch gekennzeichnet, dass** die Intensität des an der als Lochspiegel ausgebildeten Lochblende (4) reflektierten Laserlichts (6) gemessen wird.

3. Verfahren nach Anspruch 1 oder 2, **dadurch gekennzeichnet, dass** die Lochblende (4) im Bereich der Strahltaille (z₀) des fokussierten Laserstrahls (3) verfahren wird.

4. Verfahren nach einem der vorhergehenden Ansprüche, **dadurch gekennzeichnet, dass** das an der Lochblende (4) ausgeblendete, insbesondere reflektierte Laserlicht (6) auf einen Absorber (7) gelenkt und dessen Wärmemenge, insbesondere kalorimetrisch, erfasst wird.

5. Verfahren nach einem der vorhergehenden Ansprüche, **dadurch gekennzeichnet, dass** die Lochblende (4) inkrementell verfahren wird.

6. Verfahren nach einem der vorhergehenden Ansprüche, **dadurch gekennzeichnet, dass** die Lochblende (4) manuell oder automatisch verfahren wird.

7. Vorrichtung (1) zum Erfassen der Randfeldintensität eines Laserstrahls (3), insbesondere zum Durchführen des Verfahrens nach einem der
vorhergehenden Ansprüche,
mit einer im Strahlengang des Laserstrahls (3) angeordneten, in Strahlrichtung (z) linear verfahrbaren Lochblende (4) mit einer runden Lochöffnung, welche koaxial zum Laserstrahl (3) ausgerichtet ist, und mit einer Messeinheit (5) zum Erfassen der Intensität des an der Lochblende (4) ausgeblendeten Laserlichts (6).

8. Vorrichtung nach Anspruch 7, **dadurch gekennzeichnet, dass** die Lochblende (4) als Lochspiegel ausgebildet ist.

9. Vorrichtung nach Anspruch 8, **dadurch gekennzeichnet, dass** die Spiegelfläche des Lochspiegels als eine entgegen der Strahlrichtung zulaufende Kegelfläche ausgebildet ist.

10. Vorrichtung nach einem der Ansprüche 7 bis 9, **dadurch gekennzeichnet, dass** der Laserstrahl (3) fokussiert ist und die Lochblende (4) im Bereich der Strahltaille (z₀) des fokussierten Laserstrahls (3) angeordnet ist.

11. Vorrichtung nach einem der Ansprüche 7 bis 10, **dadurch gekennzeichnet, dass** die Messeinheit (5) einen im Strahlengang des an der Lochblende (4) ausgeblendeten, insbesondere reflektierten Laserlichts (6) angeordneten Absorber (7) und ein Kalorimeter (8) aufweist, das die vom Absorber (7) absorbierte Wärmemenge als Maß für die Intensität des an der Lochblende (4) ausgesendeten bzw. reflektierten Laserlichts (6) erfasst.

## Claims

1. Method for detecting the marginal field intensity of a laser beam (3), wherein an aperture diaphragm (4) comprising a round aperture opening that is aligned coaxially with respect to the laser beam (3) is moved in the beam direction (z) of the laser beam (3) and the intensity of the laser light (6) that is faded out on the aperture diaphragm (4) is measured.

2. Method according to claim 1, **characterized in that** the intensity of the laser light (6) that is reflected on the aperture diaphragm (4) formed as an aperture mirror is measured.

3. Method according to claim 1 or 2, **characterized in that** the aperture diaphragm (4) is moved in the area of the beam waist (z₀) of the focused laser beam (3).

4. Method according to any one of the preceding claims, **characterized in that** the laser light (6) that is faded out, in particular reflected, on the aperture diaphragm (4) is guided to an absorber (7) whose heat quantity is detected, in particular calorimetrically.

5. Method according to any one of the preceding claims, **characterized in that** the aperture diaphragm (4) is moved incrementally.

6. Method according to any one of the preceding claims, **characterized in that** the aperture diaphragm (4) is moved manually or automatically.

7. Device (1) for detecting the marginal field intensity of a laser beam (3), in particular, for performing the method according to any one of the preceding claims, comprising:
an aperture diaphragm (4) that is disposed in the optical path of the laser
beam (3), can be linearly moved in the beam direction (z) and has a round aperture opening that is aligned coaxially with respect to the laser beam (3), and
a measuring unit (5) for detecting the intensity of the laser light (6) that is faded out on the aperture diaphragm (4).

8. Device according to claim 7, **characterized in that** the aperture diaphragm (4) is designed as an aperture mirror.

9. Device according to claim 8, **characterized in that** the mirror surface of the aperture mirror is designed as a conical surface that tapers in a direction opposite to the beam direction.

10. Device according to any one of the claims 7 through 9, **characterized in that** the laser beam (3) is focused and the aperture diaphragm (4) is disposed in the area of the beam waist (zₒ) of the focused laser beam (3).

11. Device according to any one of the claims 7 through 10, **characterized in that** the measuring unit (5) comprises an absorber (7) that is disposed in the optical path of the laser light (6) that is faded out, in particular reflected, on the aperture diaphragm (4), and a calorimeter (8) that detects the heat quantity absorbed by the absorber (7) as a measure of the intensity of the laser light (6) that is faded out or reflected on the aperture diaphragm (4).

## Revendications

1. Procédé de détection de l'intensité du champ périphérique d'un faisceau laser (3), dans lequel un écran perforé (4) pourvu d'une ouverture ronde dirigée coaxialement au faisceau laser (3) est déplacé dans la direction de faisceau (z) du faisceau laser (3) et l'intensité de la lumière laser (6) occultée sur l'écran perforé (4) est mesurée.

2. Procédé selon la revendication 1, **caractérisé en ce que** l'intensité de la lumière laser (6) réfléchie sur l'écran perforé (4) réalisé sous la forme d'un miroir perforé est mesurée.

3. Procédé selon la revendication 1 ou 2, **caractérisé en ce que** l'écran perforé (4) est déplacé dans la région du col de faisceau (z₀) du faisceau laser (3) focalisé.

4. Procédé selon l'une des revendications précédentes, **caractérisé en ce que** la lumière laser (6) occultée, en particulier réfléchie, sur l'écran perforé (4) est dirigée sur un absorbeur (7) et sa quantité de chaleur détectée, en particulier par calorimétrie.

5. Procédé selon l'une des revendications précédentes, **caractérisé en ce que** l'écran perforé (4) est déplacé par incréments.

6. Procédé selon l'une des revendications précédentes, **caractérisé en ce que** l'écran perforé (4) est déplacé manuellement ou automatiquement.

7. Dispositif (1) de détection de l'intensité du champ périphérique d'un faisceau laser (3), en particulier pour réaliser le procédé selon l'une des revendications précédentes,
avec un écran perforé (4) disposé dans le chemin optique du faisceau laser (3), déplaçable linéairement dans la direction de faisceau (z) et pourvu d'une ouverture ronde qui est dirigée coaxialement au faisceau laser (3), et avec une unité de mesure (5) pour détecter l'intensité de la lumière laser (6) occultée sur l'écran perforé (4).

8. Dispositif selon la revendication 7, **caractérisé en ce que** l'écran perforé (4) est réalisé sous la forme d'un miroir perforé.

9. Dispositif selon la revendication 8, **caractérisé en ce que** la surface réfléchissante du miroir perforé est réalisée sous la forme d'une surface conique convergente à l'encontre de la direction du faisceau.

10. Dispositif selon l'une des revendications 7 à 9, **caractérisé en ce que** le faisceau laser (3) est focalisé et l'écran perforé (4) disposé dans la région du col de faisceau (z₀) du faisceau laser (3) focalisé.

11. Dispositif selon l'une des revendications 7 à 10, **caractérisé en ce que** l'unité de mesure (S) présente un absorbeur (7) disposé dans le chemin optique de la lumière laser (6) occultée, en particulier réfléchie, sur l'écran perforé (4) et un calorimètre (8) qui détecte la quantité de chaleur absorbée par l'absorbeur (7) comme mesure de l'intensité de la lumière laser (6) occultée ou réfléchie sur l'écran perforé (4).
